# EUROPÄISCHE PATENTSCHRIFT

(11) **EP 1 526 988 B1**
(45) Veröffentlichungstag und Bekanntmachung des Hinweises auf die Patenterteilung: **06.02.2008**
(21) Anmeldenummer: 03711828.8
(22) Anmeldetag: 20.02.2003
(51) Int. Cl.: B60R 21/015

(54) **SCHALTER ZUM ABSCHALTEN WENIGSTENS EINES AIRBAGS**
SWITCH FOR DISCONNECTING AT LEAST ONE AIRBAG
COMMUTATEUR POUR DECONNECTER AU MOINS UN AIRBAG

(30) Priorität: 31.07.2002 DE 10234854
(43) Veröffentlichungstag der Anmeldung: 04.05.2005
(73) Patentinhaber: ROBERT BOSCH GMBH, 70442 Stuttgart (DE)
(72) Erfinder: SCHOU, Franck, 70565 Stuttgart (DE)
(86) Internationale Anmeldenummer: PCT/DE2003/000521
(87) Internationale Veröffentlichungsnummer: WO 2004/016473

(56) Entgegenhaltungen:
- DE-A- 19 960 179
- DE-C- 19 835 709
- DE-U- 29 812 034
- US-A- 5 982 048

## Beschreibung

### Stand der Technik

Die Erfindung geht aus von einem Schalter zum Abschalten wenigstens eines Airbags nach der Gattung des unabhängigen Patentanspruchs.

Aus der Offenlegungsschrift DE 199 60 179 A1, das die Merkmale des Oberbegriffs des Anspruchs 1 zeigt, ist eine Sicherheitseinrichtung für Kraftfahrzeuge bekannt. Dabei weist das Kraftfahrzeug einen oder mehrere Airbags auf, die über Schaltmittel deaktivierbar sind. Die Schaltmittel sind dabei in Form eines Deaktivierungsschalters ausgebildet.

### Vorteile der Erfindung

Der erfindungsgemäße Schalter zum Abschalten wenigstens eines Airbags mit den Merkmalen es unabhängigen Patentanspruchs hat demgegenüber den Vorteil, dass bei Verwendung von zwei identischen Sensoren zur Auswertung des Schaltzustands des Schalters durch die erfindungsgemäße Beschaltung dieser Sensoren ermöglicht wird, dass zwischen den beiden Sensoren unterschieden werden kann. Damit ist insbesondere ein irrtümliches Vertauschen von Leitungen nicht mehr möglich und kann auch damit nicht mehr zu falschen Entscheidungen führen. Die erfindungsgemäße Lösung ist darüber hinaus mit nur geringem Mehraufwand realisierbar und daher ausgesprochen günstig.

Durch die in den abhängigen Ansprüchen aufgeführten Maßnahmen und Weiterbildungen sind vorteilhafte Verbesserungen des im unabhängigen Patentanspruch angegebenen Schalters zum Abschalten wenigstens eines Airbags möglich.

Besonders vorteilhaft ist, dass zwischen den beiden Sensoren durch ein unterschiedliches Widerstandsnetzwerk, das jeweils die beiden Sensoren mit einer Signalauswertung verbindet, unterschieden werden kann. Diese unterschiedlichen Widerstandsnetzwerke führen nämlich dann zu unterschiedlichen Kenngrößenbereichen für die auszuwertenden Parameter. Die Widerstandsnetzwerke sind dabei derart bemessen, dass die elektrischen Kenngrößenbereiche sich nicht überlappen. Damit ist eine eindeutige Unterscheidung zwischen den beiden Sensoren in der Signalauswertung möglich.

Weiterhin ist es von Vorteil, dass der Schalter als das unterschiedliche Widerstandsnetzwerk in einem Zweig zwischen einem der Sensoren und der Signalauswertung einen ersten Widerstand aufweist, der mit einem weiteren Widerstand der Signalauswertung einen Stromteiler bildet. Damit ist auf einfachste Weise ermöglicht worden, dass der Strom, der von diesem Sensor als elektrischer Parameter abgegeben wird, sich in einem anderen Bereich befindet, als der Strom, der vom zweiten Sensor an die Signalauswertung abgegeben wird und der keinen Stromteiler aufweist. Der erste Widerstand kann dabei vorteilhafter Weise im Schalter selbst angeordnet sein. Dies ermöglicht nämlich, dass die Ausgänge des Schalters durch die abgegebenen Parameter von außen leicht identifizierbar sind.

Vorteilhafter Weise sind die Sensoren als Hallsensoren ausgebildet, die ein kontaktfreies Schalten ermöglichen und damit verschleißfreier und robuster sind.

### Zeichnung

Ein Ausführungsbeispiel der Erfindung ist in der Zeichnung dargestellt und in der nachfolgenden Beschreibung näher erläutert.

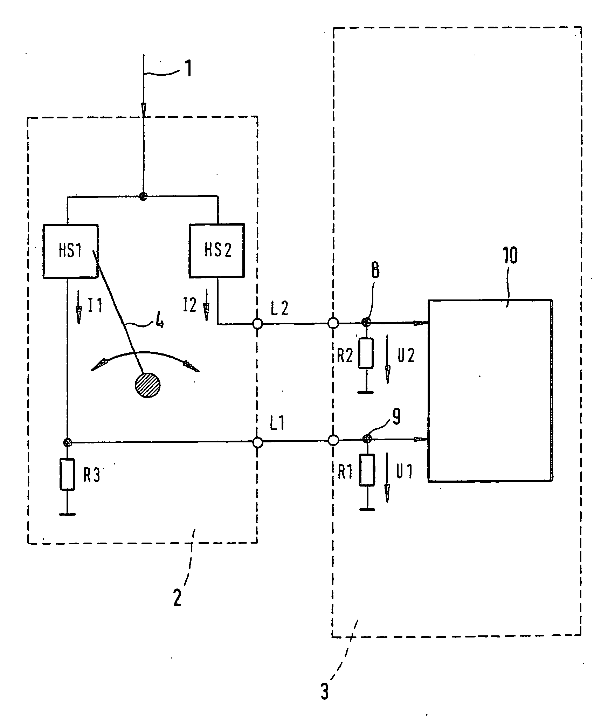

Es zeigt
- Figur 1: ein Blockschaltbild des erfindungsgemäßen Schalters, der an eine Signalauswertung angeschlossen ist.

### Beschreibung

Es ist heute weit verbreitet, dass in Fahrzeugen die Möglichkeit angeboten wird, den Beifahrerairbag bzw. die hinteren Seitenairbags per Schalter zu deaktivieren. Dies wird allgemein als Airbagdeaktivierungsschalter bezeichnet. Hierzu wird die Stellung eines Schalters, insbesondere eines Schlüsselschalters, vom Airbagsteuergerät ausgewertet. Zur Realisierung des Schalters sind zur Zeit unterschiedliche Konzepte bekannt. Zunächst sind Schalter mit Widerstandsnetzwerken, bei denen der Schalter zwischen zwei verschiedenen, d.h. unsymmetrischen Widerstandsteilem umschaltet, und Schalter, die aus ein oder zwei Hallsensoren bestehen. Hierbei wird kontaktlos, d.h. in einer mechanisch robusten Weise zwischen den zwei Strombereichen der Hallsensoren hin und her geschaltet. Sind die beiden Hallsensoren gleich ausgebildet und ist auch das Widerstandsnetzwerk zwischen den Sensoren und der Signalauswertung jeweils gleich, dann ist von außen nicht erkennbar, welche der beiden Leitungen bzw. Anschlüsse des Schalters zu welchem Hallsensor gehört. Dies kann unter Umständen zu falschen Entscheidungen führen.

Erfindungsgemäß wird nun eine Lösung vorgeschlagen, die es ermöglicht, die Hallsensoren zu unterscheiden und damit eine Fehlererkennung zu verbessern. Dabei wird eine unterschiedliche Verschaltung zwischen dem jeweiligen Sensor und der Signalauswertung vorgeschlagen. Dies bedingt unterschiedliche Kenngrößenbereiche für die auszuwertenden Parameter. Das heißt Strom und/oder Spannung sind bei gleichen Messbedingungen unterschiedlich. Die Beschaltung kann dabei so bemessen sein, dass die Kenngrößenbereiche der beiden Sensoren sich nicht mehr überlappen. Dies ermöglicht eine eindeutige Zuordnung zu den einzelnen Sensoren. Insbesondere durch Einführung eines Stromteilers in einem der Zweige zwischen dem Sensor und der Signalauswertung ist es auf einfachste Weise gelungen, eine Unterscheidung der Kenngrößenbereiche zu erreichen.

Anstatt Hallsensoren sind auch andere Sensoren zur Auswertung des Schaltzustands des Deaktivierungsschalters möglich. Neben Auswertungen, die einen magnetischen Effekt ausnutzen, sind auch solche berührungslose Konzepte möglich, die optische Effekte ausnützen. Auch solche Schaltauswertungen sind möglich, die auf mechanischen Spannungen beruhen und dies in elektrische Kenngrößen umwandeln können.

Figur 1 zeigt nun in einem Blockschaltbild den erfindungsgemäßen Schalter, der mit einer Signalauswertung verbunden ist. Ein Airbagdeaktivierungsschalter 2 erhält über einen Anschluss 1 die Spannungsversorgung. Üblicherweise wird hier über die Batterie Autobatteriespannung Energie abgegriffen. Der Airbagaktivierungsschalter 2 weist zwei Hallsensoren HS1 und HS2 auf, sowie einen vom Benutzer betätigbaren Schalter 4 und einen Widerstand R3 sowie zwei Anschlüsse nach außen L1 und L2. Die Spannungsversorgung 1 verzweigt sich auf die beiden Hallsensoren HS 1 und HS2. Der Hallsensor HS1 gibt einen Strom I1 ab, der zum Widerstand R3 und dem Anschluss L1 fließt. Der Widerstand R3 ist auf seiner anderen Seite mit Masse verbunden. Der Anschluss L1 ist über eine Leitung mit einem Steuergerät3 verbunden, und zwar an einen Anschluss 9, an den einerseits ein Messwiderstand R3 angeschlossen ist und andererseits eine Signalauswertung 10.

Die Signalauswertung 10 führt die Hallsensorsignalverarbeitung und -auswertung durch. Der Hallsensor HS2 gibt einen Strom 12 ab. Dieser fließt zum Anschluss L2, der über eine Leitung mit dem Steuergerät 3 verbunden ist, und zwar an einen Anschluss 8. Von diesem Anschluss 8 geht einerseits ein Widerstand R2 nach Masse ab und andererseits ein Anschluss zur Signalauswertung 10. Der Schalter 4 ist zwischen den beiden Hallsensoren HS 1 und HS2 schaltbar und ist mit einem Magneten verbunden, um unterschiedliche Hallströme über den Halleffekt bei den beiden Hallsensoren HS1 und HS2 zu erzeugen. Zwischen dem Hallsensor HS1 und der Signalauswertung 10 ist eine Parallelschaltung der Widerstände R1 und R3 gegeben. Diese bilden einen Stromteiler, der dafür sorgt, dass der Hallsensor HS1 zwar den gleichen Strom I1 abgibt, aber ein kleinerer Strom zur Signalauswertung 10 fließt. Dabei ist der Stromteiler R1, R3 so bemessen, dass der Strom, der zur Signalauswertung 10 fließt, nie so groß werden kann, wie der Strom 12 der vom Hallsensor HS2 zum Widerstand R2 und der Signalauswertung 10 fließt.

Als Messparameter zur Erfassung des Schaltzustands werden hier die Spannungen verwendet, die über den Widerständen R1 und R2 abfallen. Dafür sind dann die Eingänge der Signalauswertung 10 hochohmig, so dass der Mess-Strom fast vollständig durch die Widerstände R1 und R2 jeweils nach Masse abfließt.

Durch die unterschiedlichen Beschaltungen ist es möglich, dass immer der Hallsensor HS 1 bzw. der Hallsensor HS2 durch den abgegebenen Strom identifizierbar ist. Ist also der Airbagdeaktivierungsschalter auf "aus", d.h. alle Airbags sind aktiv, dann ist der Schalter 4 in der in der Figur 1 dargestellten Stellung. Anhand der Ströme ist erkennbar, dass der Hallsensor HS1 einen Mess-Strom im vorgegebenen Kenngrößenbereich abgibt. Ist jedoch der Airbagdeaktivierungsschalter aktiv, dann ist der Schalter 4 in der Stellung, dass er sich beim Hallsensor HS2 befindet. Auch dies gibt ein eindeutiges Signalmuster an den Ausgängen L2 und L1 an. Insbesondere lassen sich so vertauschte Leitungen zwischen den Anschlüssen L1 und L2 sowie 8 und 9 leicht erkennen. Damit ist eine Fehlererkennung ermöglicht worden und die Sicherheit des Betriebs gesteigert worden. Anstatt dem hier vorgestellten Stromteilerprinzip sind auch Spannungsteiler denkbar.

## Patentansprüche

1. Schalter zum Abschalten wenigstens eines Airbags mit zwei identischen Sensoren (HS1, HS2) zur Erfassung eines Schaltzustands des Schalters (2, 4), **dadurch gekennzeichnet, dass** die zwei identischen Sensoren (HS1, HS2) derart verschaltet sind, dass zur Erfassung des Schaltzustands auszuwertende elektrische Kenngrößenbereiche unterschiedlich sind.

2. Schalter nach Anspruch 1, **dadurch gekennzeichnet, dass** zwischen den beiden Sensoren (HS1, HS2) und wenigstens einer Signalauswertung (10) für die wenigstens eine elektrische Kenngröße unterschiedliche Widerstandsnetzwerke (R1, R2, R3) vorgesehen sind.

3. Schalter nach Anspruch 2, **dadurch gekennzeichnet, dass** die Widerstandsnetzwerke (R1, R2, R3) derart bemessen sind, dass die elektrischen Kenngrößenbereiche sich nicht überlappen.

4. Schalter nach einem der vorherigen Ansprüche, **dadurch gekennzeichnet, dass** zur Unterscheidung der elektrischen Kenngrößenbereiche ein erster Widerstand (R3) zwischen einem der beiden Sensoren (HS1, HS2) und der Signalauswertung (10) vorgesehen ist, der mit einem zweiten Widerstand (R1) der Signalauswertung (10) einen Stromteiler bildet.

5. Schalter nach Anspruch 4, **dadurch gekennzeichnet, dass** der erste Widerstand (R3) im Schalter (2) angeordnet ist.

6. Schalter nach einem der vorhergehenden Ansprüche, **dadurch gekennzeichnet, dass** die Sensoren (HS1, HS2) als Hallsensoren ausgebildet sind.

## Claims

1. Switch for disconnecting at least one airbag, comprising two identical sensors (HS1, HS2) for detecting a switching state of the switch (2, 4), **characterized in that** the two identical sensors (HS1, HS2) are connected up in such a way that a distinction can be drawn between electrical characteristic variable ranges which are to be evaluated in order to detect the switching state.

2. Switch according to Claim 1, **characterized in that** different resistor networks (R1, R2, R3) are provided between the two sensors (HS1, HS2) and at least one signal evaluation means (10) for the at least one electrical characteristic variable.

3. Switch according to Claim 2, **characterized in that** the resistor networks (R1, R2, R3) are dimensioned in such a way that the electrical characteristic variable ranges do not overlap.

4. Switch according to one of the preceding claims, **characterized in that**, in order to distinguish between the electrical characteristic variable ranges, a first resistor (R3) is provided between one of the two sensors (HS1, HS2) and the signal evaluation means (10), the said resistor forming a current divider with a second resistor (R1) of the signal evaluation means (10).

5. Switch according to Claim 4, **characterized in that** the first resistor (R3) is arranged in the switch (2).

6. Switch according to one of the preceding claims, **characterized in that** the sensors (HS1, HS2) are in the form of Hall sensors.

## Revendications

1. Commutateur pour déconnecter au moins un coussin gonflable, comportant deux capteurs identiques (HS1, HS2) pour saisir un état de commutation du commutateur (2, 4),
**caractérisé en ce que**
les deux capteurs identiques (HS1, HS2) sont branchés de façon que les plages de grandeurs caractéristiques électriques à exploiter pour saisir l'état de commutation soient différentes.

2. Commutateur selon la revendication 1,
**caractérisé en ce que**
des réseaux de résistances (R1, R2, R3) différents sont prévus entre les deux capteurs (HS1, HS2) et au moins un moyen d'exploitation de signal (10) pour au moins une grandeur caractéristique électrique.

3. Commutateur selon la revendication 2,
**caractérisé en ce que**
les réseaux de résistances (R1, R2, R3) sont dimensionnés pour que les plages des grandeurs caractéristiques électriques ne se chevauchent pas.

4. Commutateur selon l'une des revendications précédentes,
**caractérisé en ce que**
pour distinguer les plages de grandeurs caractéristiques électriques, une première résistance (R3) est prévue entre l'un des deux capteurs (HS1, HS2) et le moyen d'exploitation de signal (10) formant un diviseur de courant avec une seconde résistance (R1) du moyen d'exploitation de signal (10).

5. Commutateur selon la revendication 4,
**caractérisé en ce que**
la première résistance (R3) est prévue dans le commutateur (2).

6. Commutateur selon l'une des revendications précédentes,
**caractérisé en ce que**
les capteurs (HS1, HS2) sont des capteurs à effet Hall.
